(19) Europäisches Patentamt
European Patent Office
Office européen des brevets

(11) **EP 2 821 868 A1**

(12) **EUROPEAN PATENT APPLICATION**

(43) Date of publication:
**07.01.2015 Bulletin 2015/02**

(51) Int Cl.:
***G05B 19/401*** *(2006.01)*

(21) Application number: **13425095.0**

(22) Date of filing: **04.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **VIGEL S.p.A.**
**10071 Borgaro Torinese (TO) (IT)**

(72) Inventors:
• **Massaia, Marco**
**I-10149 Torino (IT)**

• **Stabio, Diego**
**I-10076 Nole (TO) (IT)**
• **Francesia Villa, Daniele**
**I-10070 Mezzenile (TO) (IT)**

(74) Representative: **Spandonari, Carlo**
**Spandonari & Modiano s.r.l.**
**Corso Duca degli Abruzzi 16**
**10129 Torino (IT)**

(54) **Machine tool provided with a calibration apparatus adapted to compensate for its structural thermal deformation.**

(57)    A frame (12) suports a machining head (36) and a support (24, 26) for workpieces (28a, 28b, 30a, 30b). The head (36) may shift with respect to the support (24, 26) along an axis (Y) upon control of a control unit (CNC). A proximity sensor (38) attached to the machining head (36) is connected to transmit an electric signal to the control unit (CNC), which signal is variable as a function of the distance of the sensor (38) from a reference element (40) attached to the support (24, 26). The control unit (CNC) is programmed to perform a calibration cycle, upon command, in which the machining head (36) is moved to a predetermined reference position (X_REF, REF_VALUE, Z_REF) in which the sensor (38) is capable of detecting the distance of the reference element (40), the actual distance (ACT_VALUE) of the reference element (40) is measured by the sensor (38), the measured actual distance (ACT_VALUE) is compared with a predetermined reference distance (REF_VALUE), and any difference between the actual distance (ACT_VALUE) and the reference distance (REF_VALUE) is compensated by correspondingly correcting the distance between the machining head (36) and the support (24, 26) along the axis (Y) during machining.

Fig. 4

**EP 2 821 868 A1**

**Description**

The present invention relates to a machine tool provided with a calibration apparatus adapted to compensate for its structural thermal deformations.

As known, a modem machine tool may comprise one or more motorized tool-holding spindles which are generally movable along one or more axes with respect to a workpiece, or workpieces, under processing.

For the sake of simplicity, in the present disclosure particular reference will be made to multi-spindle machine tools which are capable of machining several workpieces simultaneously and performing different types of operations upon them, e.g., milling, boring, and other similar operations; such machine tools being generally known as "machining centers". However, the same considerations can be applied to less sophisticated machine tools, e.g., machine tools provided with a single spindle and/or capable of performing only one type of operation upon the workpiece.

As well known to the person skilled in the art, the frame of a machine tool installed in an environment that is subject to temperature fluctuations inevitably incurs thermal deformations which, albeit very small, may affect the quality of certain high precision machinings which are required to comply with very tight tolerances, typically in the order of a few cents of a millimeter.

Nowadays, attempts have been made to minimize the above thermal deformations by controlling the temperature of the liquid used for cooling the machining tools by means of powerful refrigerators, however with unsatisfactory results.

Alternatively, or in addition, the machine tool may be installed in an air-conditioned room for stabilizing the temperature of the working environment.

The above solutions both have the drawback of involving a very high energy consumption, resulting in increased machining costs as well as negative effects in terms of environmental impact.

A different approach consists in accepting the presence of such structural thermal deformations and periodically compensating for them by adjusting the work cycle of the machine tool.

According to a know system adopting this approach, various temperature sensors are placed in significant points of the frame of the machine tool. The temperature values measured in these points are used to calculate the deformation by means of simulation models created on the basis of experimental tests, in which the variations of the temperature in these significant points are put into relation with the resulting structural deformations.

The above system has the drawback that it has a low reliability, because the deformation is not measured directly but is only estimated by measuring the temperature of the frame in a few points, without considering other parameters which could affect the structural deformation of the machine tool, e.g., quick variations of the environmental temperature, air currents which could hit non-sensorized parts of the frame, and the like.

Other known systems make use of mechanical feelers which may be installed on the spindle in place of the machining tool for measuring any misplacements of the workpiece with respect to the spindle, e.g., during a machining cycle, or between one machining cycle and the next one, and then adjusting the work cycle accordingly.

Such systems, with respect to the previous ones, have the advantage that a real (i.e., not simulated) measurement of the deformation is made, however they have other drawbacks.

Firstly, the accuracy of the measurement may be affected, e.g., by the presence of chips, dust, coolant, and the like, on the reference surface of the workpiece against which the feeler comes into contact.

Moreover, the operations of loading/unloading the feeler lengthen the machining time and consequently reduce the productive capacity of the machine tool.

Furthermore, since the adjustment should be performed periodically at predetermined, relatively short time intervals, this system is only suitable for sophisticated machining centers having a tool store which is directly accessible by the spindles, so that the operations of loading/unloading the mechanical feeler can be automated, while it is not suitable for basic machine tools in which, e.g., the tools are installed manually.

In addition, mechanical feelers capable of making very accurate measurements as required for this application, with a sensitivity in the order of a few cents of a millimeter, are very expensive and delicate, also because, as known, the data are transmitted from the feeler to the control unit via radio.

Therefore, it is a main object of the present invention to provide a machine tool provided with a calibration apparatus which is capable of reliably and accurately compensating for any structural thermal deformations of the machine tool, without having the above-cited drawbacks of the known systems, particularly, which is less susceptible to error in case of residues in the machining area, which has a low impact on the machining time, which is also suitable for installation on basic machine tools, e.g., machine tools in which the tool is loaded manually, and which has a relatively low cost with respect to systems based on mechanical feelers.

The above objects and other advantages, which will better appear from the following description, are achieved by the machine tool having the feature recited in claim 1, while the dependent claims state other advantageous, though secondary features, of the invention.

The invention will be now described in more detail, with reference to a few preferred, non exclusive embodiments, shown by way of non limiting example in the attached drawings, wherein:

Fig. 1 is a broken-away, perspective view of a machine tool provided with a calibration apparatus according to the invention;

Fig. 2 is a broken-away, plan view of the machine tool of Fig. 1;

Fig. 3 is a view in side elevation of the machine tool of Fig. 1, shown in a broken-away, cross-sectional view along line III-III of Fig. 2;

Fig. 4 is a cross-sectional view along line IV-IV of Fig. 2, in which a detail of the machine tool according to the invention is shown to an enlarged scale;

Fig. 5 is a flowchart which describes the calibration cycle carried out on the machine tool according to the invention;

Fig. 6 is a view similar to Fig. 4, which shows the same detail of the machine tool according to the invention in a different operative configuration.

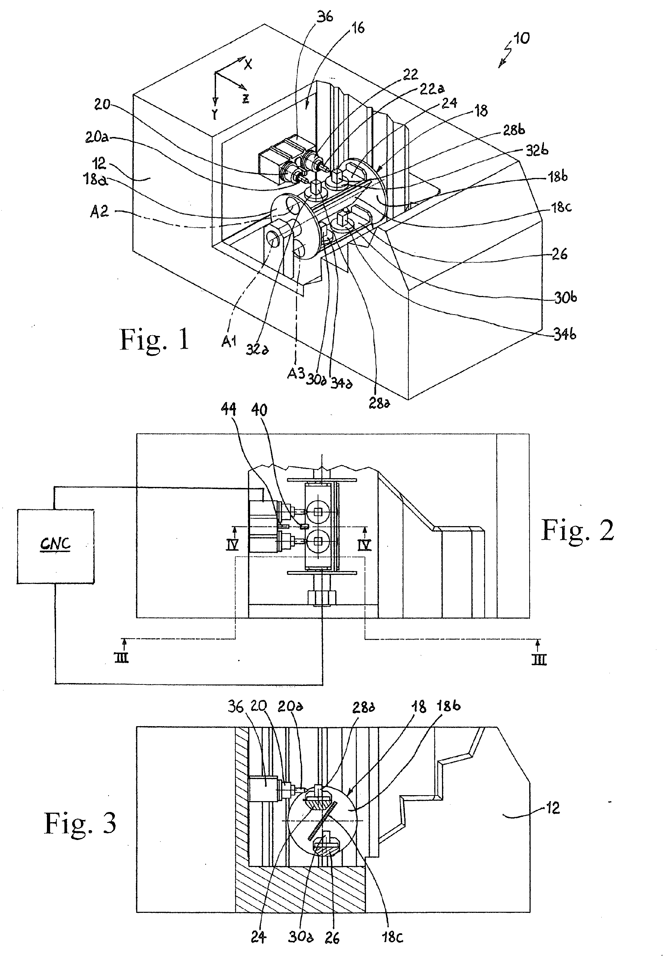

With initial reference to Figs. 1-3, a machine tool or machining center 10 comprises a closed frame 12 (only diagrammatically shown in Figs. 1-3) having a machining area 16 defined therein. A pallet-exchanger 18 is pivotally supported in machining area 16 about a horizontal axis A1 and, in front of it, a pair of motorized spindles 20, 22 holding respective machining tools 20a, 22a are arranged side by side with their axes lying horizontally at right angles to axis A1 of pallet-exchanger 18.

In a way known per se, pallet exchanger 18 comprises two disc-shaped end plates 18a, 18b which are coaxially interconnected along axis A1 by a transverse plate 18c extending diametrally. Two workpiece carriers 24, 26 are hinged between disc-shaped plates 18a, 18b at diametrally opposite positions, with transverse plate 18c extending between them, about respective axes A2, A3 parallel to axis A1 of pallet exchanger 18. Workpiece carriers 24, 26 each support two side-by-side workpieces 28a, 28b and 30a, 30b on respective turntables 32a, 32b and 34a, 34b aligned to spindles 20, 22. In a way known per se, both pallet-exchanger 18 and workpiece carriers 24, 26, as well as turntables 32a, 32b and 34a, 34b, are operatively connected to respective driving mans (not shown) controlled by a numerical control unit CNC (only diagrammatically shown in Figs. 2, 4 and 6).

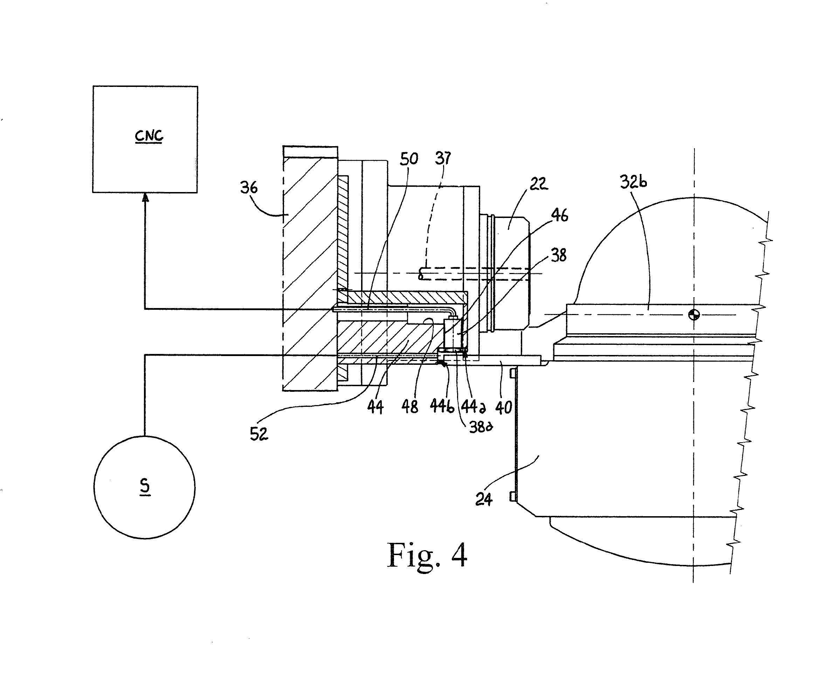

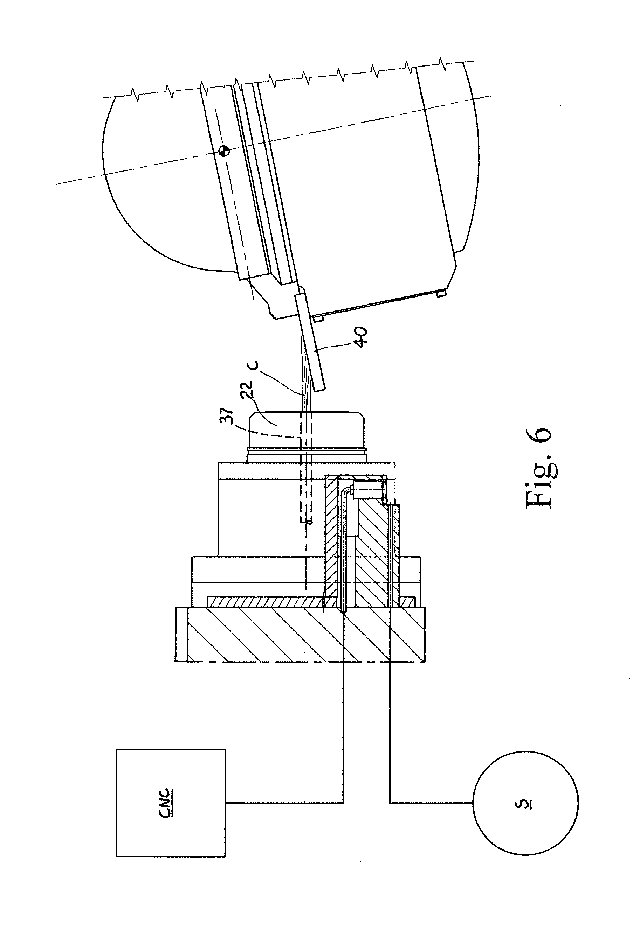

Pallet-exchanger 18 is driven to rotate by steps of 180° about its axis A1 in order to alternately place one of the workpiece carriers 24 or 26 in machining area 16 in front of spindles 20, 22, and the other workpiece carrier in a workpiece-loading/unloading position, in which it is accessible in safety by an operator even while the machine is running in order to unload the workpieces already machined and load new blanks. Workpiece carriers 24, 26 may be driven to rotate about their horizontal axes A2, A3, e.g., for maintaining the horizontal position independently from the rotation of pallet-exchanger 18 or orienting those faces of the workpieces, which would be otherwise unaccessible, towards tools 20a, 22a. Spindles 20, 22 are supported by a machining head 36, which is movable along three axes X, Y, Z lying at right angles to each other upon control of driving means (not shown) which are also controlled by numerical control unit CNC. The latter is conventionally programmed to perform high precision machining upon the workpieces, on the basis of a user design. Moreover, spindles 20, 22 each conventionally incorporate a respective cooling circuit 37 (only diagrammatically shown in Figs 4, 6) which is operable to shoot a jet of high pressure coolant, e.g., 20 bar, to the contact area between the tool and the workpiece during machining.

Machining center 10 is provided with a calibration apparatus which is adapted to compensate for any thermal deformations of frame 12 which may cause the real position of head 36 with respect to workpiece carriers 24, 26, during machining, to be different from what expected, resulting in machining inaccuracy.

Having now particular reference to Fig. 4, the calibration apparatus according to the invention comprises an inductive proximity sensor 38 attached to head 36, and, per each one of the workpiece carriers 24, 26, a respective reference plate 40 made of a ferromagnetic material, which is attached to the workpiece carrier and is arranged in such a way that, with head 36 and workpiece carrier 24 or 26 arranged close to each other at a predetermined reference position, the sensor is capable of detecting the distance of reference plate 40 and sending a corresponding electric signal to numerical control unit CNC, during a calibration cycle which will be described in more detail below. In this regard, reference will be indifferently made in this context to detecting either "the position" or "the distance" of reference plate 40 by the sensor 38; in fact, it should be understood that these expressions both refer to detecting a relative position of the reference plate, which moves integrally with the respective workpiece carrier, with respect to the sensor, which is integral with the machining head.

In a way known per se and not shown herein, inductive proximity sensor 38 incorporates a high frequency oscillator, which generates an electromagnetic field near a sensitive end 38a of sensor 38 by means of a bobbin. When reference plate 40 enters the electromagnetic field, the oscillation is reduced in amplitude as closer as the ferromagnetic element comes to the sensitive end of the sensor; as a result, the sensor outputs an analog signal, e.g., in Volts, which is univocally variable as a function of the distance between the sensor and the reference element.

In the example described herein, an inductive sensor marketed by BAUMER® with the code IWRM 18U95/404971 has been used.

Sensor 38 is attached to head 36 between spindles 20, 22, by a support 44 having a vertical, cylindrical seat 46 in which the sensor is received with its detection axis lying vertically. Cylindrical seat 46 communicates with a passage 48 housing wires 50 which connect sensor 38 to numerical control unit CNC. Sensitive end 38a of sensor 38 opens on a horizontal, lower surface 44a of support 44 which has a vertical wall 44b projecting downwards behind it. A duct 52 extending within support 44 has an inlet end connected to a pressurized air source S (only diagrammatically shown in Fig. 4) and an outlet end opening on vertical wall 44b near sensitive end 38a of sensor 38.

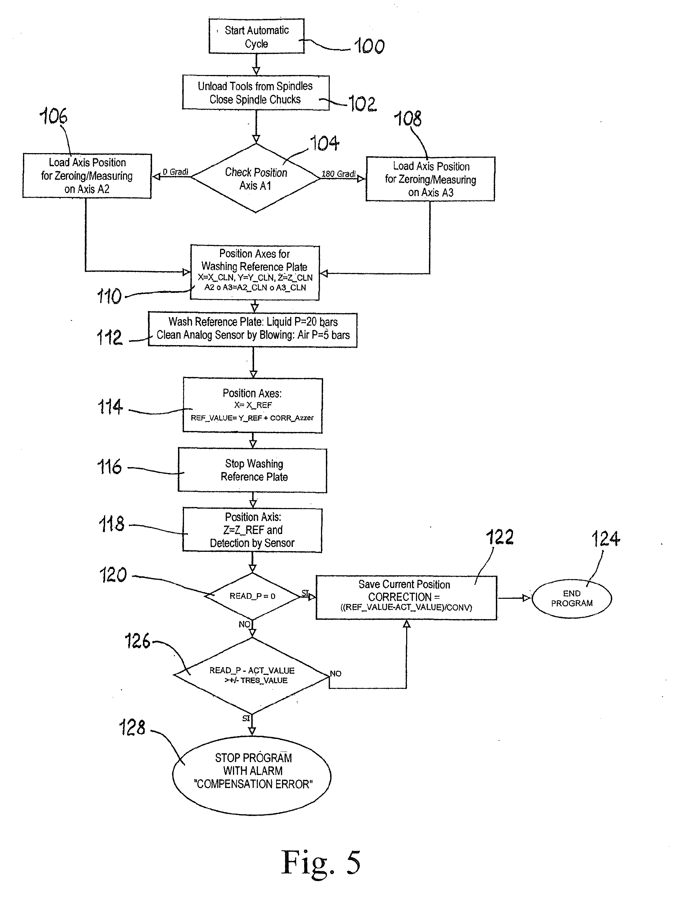

The flowchart of Fig. 5 illustrates the steps of the calibration cycle according to the invention in detail, which starts at block 100. Advantageously, the calibration cycle is automatically activated by numerical control unit CNC, e.g., at predetermined time intervals during a machining cycle, or in the interval between a machining cycle and the next one. At block 102, tools 20a, 22a are unloaded from spindles 20, 22 and the spindle chucks are closed. At block 104, the position of pallet-exchanger 18 about its axis A1 is checked and, depending on which is the workpiece carrier on which the next machining cycle will be performed, the reference position of head 36 is loaded in relation to either workpiece carrier 24 (block 106, axis A2) or workpiece carrier 26 (block 108, axis A3). At block 110, head 36, as well as that workpiece carrier 24 or 26 on which the next machining cycle will be performed, are carried to respective washing positions X_CLN, Y_CLN, Z_CLN and A2_CLN or A3_CLN, such that the liquid jet C from the cooling circuit 37 of one of the spindles will be directed towards reference plate 40, as shown in Fig. 6, in order to clean up any machining residues from it. At block 112, the washing of reference plate 40 is started, and pressurized air, e.g., at 5 bars, is simultaneously fed into duct 52 of support 44 in order to clean sensitive end 38a of sensor 38 by blowing. At block 114, head 36 is carried to its reference position with respect to axes X and Y. In particular, the reference position with respect to axis X is a predetermined value X_REF, while the reference position with respect to axis Y, REF_VALUE, is given by the formula

$$REF\_VALUE = Y\_REF + CORR\_Azzer,$$

wherein Y_REF is a fixed reference position and CORR_Azzer is a correction factor set during a preliminary zeroing cycle. At block 116, the washing of reference plate 40 is stopped. At block 118, head 36 is also carried to its reference position with respect to longitudinal axis Z, Z_REF, so that sensor 38 is placed above reference plate 40, as shown in Fig. 4, detects its position, and transmits a corresponding electric signal to control unit CNC, which signal is variable as a function of the distance between reference plate 40 and sensor 38. At block 124, the system checks wether this was the first detection after the zeroing cycle. If this was the first detection (READ_P = 0), the correction of position with respect to axis Y is saved at block 126, based on the formula

$$CORRECTION = (((REF\_VALUE - ACT\_VALUE)/CONV)$$

wherein ACT_VALUE is the actual position measured by the sensor with respect to axis Y, and CONV is a coefficient which converts the output of the sensor from millivolts to millimeters; then, the program is terminated at block 124. If this was not the first detection, at block 126 the system checks wether the difference between the last detection and the actual detection is greater than or equal to (in module) a treshold value TRES_VALUE, e.g., 120 mV. If not, the correction of position is saved at block 122 and the program is terminated at block 124. If yes, an alarm signal is generated at block 128 and the program is stopped, which circumstance is indicative of an anomaly in the measurement, e.g., due to the presence of chips on reference plate 40. Once applied the correction, numerical control unit CNC compensates for any difference between actual position ACT_VALUE and reference position REF_VALUE by correspondingly adjusting the position of the head along axis Y during machining.

As the person skilled in the art will appreciate, the calibration apparatus according to the invention, which is based on a proximity sensor fixed to head 36, allows the impact of the calibration cycle on the work cycle to be considerably reduced, because it does not require to load/unload separate measuring devices on/from the spindle. In this regard, it should be noted that in the calibration cycle described herein the machining tools are preliminarly unloaded because, in certain cases, they could interfere either with other parts of the machine or with the workpieces under processing, e.g., when head 36 moves to its washing position or its reference position; however, depending on the machining tools installed, on the position of the sensor, on the shape of the workpieces, etc., the calibration cycle could be performed even without unloading the tools, with further reduction of the cycle time. In addition, the system described herein is also suitable to be installed on basic machine tools, not only because it has a relatively low cost, but also because it does not require a machine tool provided with an automatic tool-store accessible by the spindles.

A preferred embodiment of the invention has been described herein, but of course many changes may be made by the person skilled in the art within the scope of the claims. For instance, in the embodiment described herein the calibration apparatus provides to compensate for structural thermal deformations along vertical axis Y only. However, the same concepts may be applied to compensate also (or only) for deformations in the direction of one or both of the other two axes X and Z, by installing further sensors and respective reference elements which are oriented correspondingly, with small changes which will be obvious to the person skilled in the art. Furthermore, although in this description reference has been made only to inductive proximity sensors, of course, proximity sensors of a different type may be used, provided that they are capable of detecting a position without contact, in particular, capacitive proximity sensors; in this case, reference plate 40 can be made of a non-ferromagnetic material, provided that it is made of a conductive material. In addition, in the described embodiment the head can shift along three axes lying at right angles to each other, while the workpieces can only rotate about the axes of pallet-exchanger 18, workpiece carriers 24, 26, and turntables 32a, 32b and 34a, 34b; however, in other cases, the spindles could be stationary and the workpieces could be capable of shifting, or both the workpieces and the spindles could be capable of shifting. Therefore, sometimes reference is made to "relative" positions in the claims. Moreover, in case of less sophisticated machine tools, or machine tools having lower needs in terms of productive capacity, the pallet-exchanger may be simply replaced by a fixed pallet carrier. Similarly, supporting the workpieces on turntables 32a, 32b and 34a, 34b should be construed as a useful feature which improves the versatility of the machine tool, but of course it has no effect on the scope of the claims. Also cooling circuit 37, which is shown in the Figures as incorporated in the spindle, of course could be conventionally arranged outside of it. Moreover, control unit CNC may be programmed to automatically generate the command which starts the calibration cycle, e.g., at predetermined time intervals, or at a predetermined point of the work cycle, or during the interval between a work cycle and the next one, but of course this command could be given manually by the user.

**Claims**

1. A machine tool, comprising a frame (12) suporting a machining head (36) and a support (24, 26) for workpieces (28a, 28b, 30a, 30b), at least one of said head (36) and said support (24, 26) being operable to shift with respect to the other one of said machining head (36) and said support (24, 26) along at least one axis (Y) upon control of a control unit (CNC), **characterized in that** it comprises a proximity sensor (38) which is attached to one of said machining head (36) and said support (24, 26) and is connected to transmit an electric signal to said control unit (CNC), which signal is variable as a function of the distance of the sensor (38) from a reference element (40) attached to the other one of said machining head (36) and said support (24, 26),
and **in that** said control unit (CNC) is programmed to perform a calibration cycle, upon command, which comprises the steps of:

   - moving said machining head (36) and/or said support (24, 26) to a predetermined relative reference position (X_REF, REF_VALUE, Z_REF) in which said sensor (38) is capable of detecting the distance of said reference element (40),
   - measuring the actual distance (ACT_VALUE) of said reference element (40) by said sensor (38),
   - comparing the measured actual distance (ACT_VALUE) with a predetermined reference distance (REF_VALUE), and
   - compensating for any difference between said actual distance (ACT_VALUE) and said reference distance (REF_VALUE) by correspondingly correcting the distance between said machining head (36) and said support (24, 26) along said axis (Y) during machining.

2. The machine tool of claim 1, **characterized in that** said proximity sensor is an inductive proximity sensor (38) and said reference element (40) is made of a ferromagnetic material.

3. The machine tool of claim 1, **characterized in that** said proximity sensor is a capacitive proximity sensor (38) and said reference element (40) is a plate made of a conductive material.

4. The machine tool of any of claims 1 to 3, **characterized in that** it comprises washing means (37) which are operable by said control unit (CNC) to subject said reference element (40) to a washing cycle before measuring said actual distance (ACT_VALUE).

5. The machine tool of claim 4, in which said machining head (36) is provided with cooling means (37) operable during machining to hit the contact area between a machining tool and the workpiece with a jet of pressurized liquid, **characterized in that** said washing means consist of said cooling means, and said washing cycle comprises the step of positioning said machining head (36) and said support (24, 26), by said control unit (CNC), in a relative washing position (X_CLN, Y_CLN, Z_CLN and A2_CLN o A3_CLN) in which said jet of pressurized fluid is directed toward said reference element (40).

6. The machine tool of any of claims 1 to 5, **characterized in that** it comprises blowing means (52, S) directed to a sensitive end (38a) of said sensor (38) for subjecting the latter to a cleaning cycle by a blow of pressurized air, and **in that** said control unit (CNC) is programmed to activate said blowing means before measuring said actual distance.

7. The machine tool of claim 6, **characterized in that** said sensor (38) is mounted on a support (44) integral with said machining head (36), and said blowing means comprise a duct (52) which extends within said support (44) and has an input end connected to a pressurized air source (S) and an outlet end arranged near said sensitive end (38a) of the sensor (38).

8. The machine tool of any f claims 1 to 7, **characterized in that** said control unit (CNC) is programmed to compare the difference between the distance measured during the last calibration cycle (READ_P) and the actual distance (ACT_VALUE), and to generate an alarm signal if said difference, in module, is higher than a predetermined threshold value (TRES_VALUE) indicative of an anomaly in the measurement.

Fig. 1

Fig. 2

CNC

Fig. 3

Fig. 4

```
┌─────────────────┐
│ Start Automatic │        100
│     Cycle       │
└────────┬────────┘
         │
         ▼
┌──────────────────────────┐
│ Unload Tools from Spindles│      102
│   Close Spindle Chucks    │
└────────┬─────────────────┘
         │
         ▼
```

106                          104                               108

```
┌──────────────────┐              ◇              ┌──────────────────┐
│ Load Axis Position│   D Gradi   ◇ Check ◇  180 Gradi │ Load Axis Position│
│ for Zeroing/Measuring│ ◄─────── ◇ Position ◇ ───────► │ for Zeroing/Measuring│
│    on Axis A2     │              ◇ Axis A1 ◇          │    on Axis A3     │
└─────────┬────────┘              ◇              └────────┬─────────┘
          │                                               │
          │        ┌──────────────────────────┐          │
          │        │    Position Axes for      │          │
          └───────►│  Washing Reference Plate  │◄─────────┘
                   │ X=X_CLN, Y=Y_CLN, Z=Z_CLN │
   110             │ A2 o A3=A2_CLN o A3_CLN   │
                   └──────────────┬───────────┘
                                  │
                                  ▼
                   ┌──────────────────────────────────────┐
        112        │ Wash Reference Plate: Liquid P=20 bars │
                   │ Clean Analog Sensor by Blowing: Air P=5 bars│
                   └──────────────┬───────────────────────┘
                                  │
                                  ▼
                   ┌──────────────────────────┐
        114        │      Position Axes:       │
                   │         X= X_REF          │
                   │ REF_VALUE= Y_REF + CORR_Azzer│
                   └──────────────┬───────────┘
                                  │
                                  ▼
                   ┌──────────────────────────┐
        116        │      Stop Washing         │
                   │     Reference Plate       │
                   └──────────────┬───────────┘
                                  │
                                  ▼
                   ┌──────────────────────────┐
        118        │      Position Axis:       │
                   │      Z=Z_REF and          │
                   │    Detection by Sensor    │
                   └──────────────┬───────────┘
```

120                                          122                    124

```
         ◇                    ┌──────────────────────────┐      ╭──────────╮
         ◇ READ_P = 0 ◇  SI   │   Save Current Position   │      │   END    │
         ◇           ◇ ─────► │      CORRECTION =         │ ───► │ PROGRAM  │
         ◇           ◇        │ ((REF_VALUE-ACT_VALUE)/CONV)│     ╰──────────╯
            │                 └──────────────────────────┘
            │ NO                            ▲
            ▼                               │
126         ◇                               │
            ◇ READ_P - ACT_VALUE ◇   NO     │
            ◇  >+/- TRES_VALUE    ◇ ────────┘
            ◇                     ◇
               │
               │ SI
               ▼
        ╭──────────────────╮
128     │  STOP PROGRAM    │
        │   WITH ALARM     │
        │"COMPENSATION ERROR"│
        ╰──────────────────╯
```

## Fig. 5

Fig. 6

Europäisches
Patentamt
European
Patent Office
Office européen
des brevets

# EUROPEAN SEARCH REPORT

Application Number

EP 13 42 5095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/271027 A1 (TERAI HIROSHI [JP] ET AL) 29 October 2009 (2009-10-29) * paragraphs [0012], [0015], [0017], [0018] - [0021], [0051] - [0053], [0062], [0068], [0069], [0071], [0073], [0074], [0081], [0083], [0085], [0087]; figures 1-3 * ----- | 1-8 | INV. G05B19/401 |
| A | EP 0 138 375 A2 (FELLOWS CORP [US]) 24 April 1985 (1985-04-24) * page 11, lines 14-26; figures 1-3 * ----- | 1,8 | |
| A | GB 2 122 516 A (IMA SPA) 18 January 1984 (1984-01-18) * the whole document * ----- | 1-8 | |

TECHNICAL FIELDS
SEARCHED       (IPC)

G05B

The present search report has been drawn up for all claims

| Place of search | Date of completion of the search | Examiner |
|---|---|---|
| The Hague | 7 November 2013 | Salvador, Didier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P04C01)

## ANNEX TO THE EUROPEAN SEARCH REPORT
### ON EUROPEAN PATENT APPLICATION NO.

EP 13 42 5095

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2013

| Patent document cited in search report | | Publication date | Patent family member(s) | | Publication date |
|---|---|---|---|---|---|
| US 2009271027 | A1 | 29-10-2009 | CN | 101528413 A | 09-09-2009 |
| | | | EP | 2098330 A1 | 09-09-2009 |
| | | | JP | 4896152 B2 | 14-03-2012 |
| | | | KR | 20090067172 A | 24-06-2009 |
| | | | TW | 200829354 A | 16-07-2008 |
| | | | US | 2009271027 A1 | 29-10-2009 |
| | | | WO | 2008050551 A1 | 02-05-2008 |
| EP 0138375 | A2 | 24-04-1985 | AT | 384978 B | 10-02-1988 |
| | | | BR | 8407068 A | 13-08-1985 |
| | | | CA | 1227960 A1 | 13-10-1987 |
| | | | DE | 3484412 D1 | 16-05-1991 |
| | | | EP | 0138375 A2 | 24-04-1985 |
| | | | IN | 164632 A1 | 22-04-1989 |
| | | | JP | S60501596 A | 26-09-1985 |
| | | | US | 4533858 A | 06-08-1985 |
| | | | WO | 8501366 A1 | 28-03-1985 |
| GB 2122516 | A | 18-01-1984 | BR | 8301485 A | 12-06-1984 |
| | | | DE | 3309722 A1 | 29-12-1983 |
| | | | GB | 2122516 A | 18-01-1984 |
| | | | IT | 1156613 B | 04-02-1987 |
| | | | JP | S597535 A | 14-01-1984 |
| | | | US | 4530626 A | 23-07-1985 |

EPO FORM P0459

For more details about this annex : see Official Journal of the European Patent Office, No. 12/82